# EUROPÄISCHE PATENTSCHRIFT

(11) **EP 3 793 848 B1**
(45) Veröffentlichungstag und Bekanntmachung des Hinweises auf die Patenterteilung: **17.04.2024**
(21) Anmeldenummer: 19724195.3
(22) Anmeldetag: 14.05.2019
(51) Int. Cl.: B60J 1/20, B60J 7/00

(54) **FÜHRUNGSSCHIENE, VERDUNKELUNGSVORRICHTUNG FÜR EIN KRAFTFAHRZEUG, FAHRZEUGDACH UND KRAFTFAHRZEUG**
GUIDE RAIL, SHADING DEVICE FOR A MOTOR VEHICLE, VEHICLE ROOF AND MOTOR VEHICLE
RAIL DE GUIDAGE, DISPOSITIF D'OBSCURCISSEMENT POUR VÉHICULE AUTOMOBILE, TOIT DE VÉHICULE ET VÉHICULE AUTOMOBILE

(30) Priorität: 15.05.2018 DE 102018111548
(43) Veröffentlichungstag der Anmeldung: 24.03.2021
(73) Patentinhaber: Webasto SE, 82131 Stockdorf (DE)
(72) Erfinder: RIEGGER, Marian, 82131 Stockdorf (DE); BRAUN, Bernhard, 82131 Stockdorf (DE)
(74) Vertreter: Epping - Hermann - Fischer
(86) Internationale Anmeldenummer: PCT/EP2019/062336
(87) Internationale Veröffentlichungsnummer: WO 2019/219677

(56) Entgegenhaltungen:
- EP-A1- 2 679 422
- WO-A1-2010/063312
- DE-A1-102010 018 259
- DE-A1-102014 005 475
- DE-U1-202014 103 268
- KR-A- 20150 073 648

## Beschreibung

Die Erfindung betrifft eine Führungsschiene für eine Verdunklungsvorrichtung für ein Fahrzeug. Die Erfindung betrifft auch eine Verdunklungsvorrichtung für ein Fahrzeug, ein Fahrzeugdach sowie ein Fahrzeug.

Aus dem Stand der Technik sind Verdunklungsvorrichtungen (auch Rolloanordnungen genannt) mit Rollobahnen zur Verwendung in einem Fahrzeug bekannt. Derartige Verdunklungsvorrichtungen dienen zum Schutz vor Sonneneinstrahlung unter einem transparenten Dachabschnitt des Fahrzeugs. Beispielsweise kann es sich dabei um ein Glaspanoramadach oder ein Schiebedach handeln. Typischerweise wird die Rollobahn in einer Auszugsrichtung, etwa der Fahrzeuglängsrichtung, gespannt. Zusätzlich wird die Rollobahn auch quer zur Auszugsrichtung gespannt, um ein Durchhängen der Rollobahn sowie ein Flattern oder Schwingen dieser zu vermeiden. Eine solche Rolloanordnung ist beispielsweise aus der EP 2 004 430 B1 oder der KR 2015 0073648 A bekannt.

Eine Aufgabe, die der vorliegenden Erfindung zugrunde liegt, ist es, ein Konzept für eine Verdunklungsvorrichtung anzugeben, welches zu einem präzisen und insbesondere geräuscharmen Betrieb dieser beiträgt.

Gemäß der Erfindung ist eine Führungsschiene offenbart. Die Führungsschiene weist einen Führungskanal zur verschiebbaren Führung einer Rollobahn auf. Die Führungsschiene weist eine Öffnung auf, aus der die Rollobahn entlang eines Umlenkbereichs aus dem Führungskanal herausführbar ist. Die Führungsschiene ist im Umlenkbereich derart ausgebildet, dass in einem betriebsgemäßen Zustand mit Rollobahn eine zumindest teilweise Linienanlage durch die Rollobahn ausbildbar ist. Der Umlenkbereich der Führungsschiene weist ein Blumenkohlprofil auf.

Gemäß einem Aspekt wird eine Verdunklungsvorrichtung für ein Fahrzeug offenbart. Die Verdunklungsvorrichtung weist eine Rollobahn und eine Wickelwelle zum Auf- und Abwickeln der Rollobahn entlang einer Auszugsrichtung auf. Die Verdunklungsvorrichtung weist gegenüberliegend angeordnete Führungsschienen der oben beschriebenen Art auf, die jeweils einen sich entlang der Auszugsrichtung erstreckenden Führungskanal aufweisen. Die Rollobahn ist an gegenüberliegenden Seiten zumindest beim Auf- bzw. Abwickeln in den Führungskanälen der Führungsschiene verschiebbar entlang der Auszugsrichtung geführt und erstreckt sich zwischen den Führungsschienen derart, dass die Rollobahn aus jedem Führungskanal heraus entlang eines Umlenkbereichs in Richtung des jeweils anderen Führungskanals geführt ist, wobei die Rollobahn in dem jeweiligen Umlenkbereich an der zugehörigen Führungsschiene anliegt. Jede Führungsschiene ist im Umlenkbereich derart ausgebildet, dass eine zumindest teilweise Linienanlage durch die Rollobahn ausgebildet ist, sodass entlang der Auszugsrichtung ein flächiger, insbesondere voll- oder glattflächiger, Kontakt vermieden ist. Der Umlenkbereich jeder Führungsschiene weist ein Blumenkohlprofil auf.

Teilweise Linienanlage beziehungsweise Linienauflage bedeutet, dass die Rollobahn zumindest teilweise entlang der Auszugsrichtung entlang einer oder mehrerer Linien auf den Führungsschienen in den Umlenkbereichen aufliegen. Mit anderen Worten bedeutet Linienauflage, dass der Umlenkbereich hinsichtlich seiner Formgebung so ausgebildet ist, dass die Rollobahn zumindest teilweise auf zylindrisch oder rund geformten Bereichen der Führungsschiene aufliegt und damit der flächige, insbesondere voll- oder glattflächige, Kontakt vermieden ist. Der Begriff Linienauflage umfasst auch Flächenauflagen, die nicht mit bloßem Auge zu erkennen sind. Mit anderen Worten sind minimale, etwa mikroskopische Flächenauflagen mitumfasst. Auch sind damit Ausführungsformen umfasst, bei denen sich die Rollobahn beispielsweise zumindest teilweise um kleine Wellenbereiche schmiegt. Allgemein ausgedrückt soll im Umlenkbereich ein vollständiges Aufliegen der Rollobahn auf der Führungsschiene vermieden sein. Die Linienauflage erfolgt entlang der Führungsschienen, etwa entlang der Auszugsrichtung.

Durch die entsprechende Formgebung der Umlenkbereiche wird eine typischerweise vorgesehene Flächenauflage zumindest teilweise, etwa abschnittsweise, in eine Linienauflage umgewandelt. Dadurch verändert sich ein punktueller Druck im Umlenkbereich zwischen Führungsschiene und Rollobahn, etwa der Kontaktfläche oder dem Kontaktbereich. Dies führt dazu, dass beim Auf- und Abwickeln der Rollobahn die Reibung verändert und in einer anderen Schleiffrequenz angeregt wird. Dies trägt erheblich dazu bei, Geräuschemissionen zu reduzieren oder gar zu vermeiden. Insbesondere wird dazu beigetragen ein Quietschen beim Auf- und Abwickeln der Rollobahn zu vermeiden.

Es ergeben sich mehrere denkbare Lösungen für die konkrete Ausgestaltung der Umlenkbereiche.

Beispielsweise weist der Umlenkbereich jeder Führungsschiene ein welliges Profil oder ein Rillenprofil auf. Alternativ oder zusätzlich weist der Umlenkbereich jeder Führungsschiene ein Profil auf, welches zumindest teilweise durch abwechselnd angeordnete Rillen und Wellen gebildet ist. Alternativ oder zusätzlich weist der Umlenkbereich jeder Führungsschiene ein Profil auf, welches aneinandergereihte Wellenberge aufweist (positiver Anteil einer klassischen Sinusfunktion). Zusätzlich kann der Umlenkbereich jeder Führungsschiene ein Blumenkohlprofil aufweisen. Es sind auch andere Ausgestaltungen denkbar sowie Kombinationen der obigen Ausführungsformen.

Die obigen Ausführungsformen ermöglichen die eingangs genannten Vorteile und Funktionen.

Gemäß einer Ausführungsform ist die Rollobahn durch einen Rollostoff gebildet, an dessen gegenüberliegenden Seitenrändern jeweils ein Textilelement festgelegt ist. Jedes Textilelement weist einen Führungsabschnitt auf, der in dem Führungskanal der entsprechenden Führungsschiene geführt ist. Jedes Textilelement liegt an dem entsprechenden Umlenkbereich an und ist aus dem jeweiligen Führungskanal heraus geführt. Das Textilelement ist aus einem im Vergleich zum Rollostoff typischerweise unterschiedlichen Material gebildet und ist als Seitenband ausgebildet. Das Textilelement ist fest, etwa stoffschlüssig, mit dem Rollostoff verbunden. Das Textilelement ist beispielsweise ein Textilband aus Stoff und entsprechend für die Führung in den Führungskanälen mehrfach umgeschlagen oder mehrlagig ausgebildet. Alternativ ist das Textilelement ein Textilmodul, welches ein Textilband mit zusätzlichem Verstärkungselement ist. Das Verstärkungselement dient der sicheren und stabilen Führung in den Führungskanälen.

Gerade bei Verwendung von den oben beschriebenen Textilelementen treten die genannten Probleme auf, die durch die beschriebene Anpassung der Führungsschienen weitestgehend vermieden werden.

Gemäß einer Ausführungsform ist die Rollobahn quer zur Auszugsrichtung zumindest beim Auf- und Abwickeln gespannt. Gerade bei stark unter Spannungen stehenden Rollobahnen können die eingangs genannten Probleme besonders effektiv vermieden werden. Insbesondere wird so eine erhebliche Verbesserung hinsichtlich der Geräuschemissionen beim Betrieb der Verdunklungsvorrichtung erreicht.

Gemäß einer Ausführungsform ist der Umlenkbereich jeder Führungsschiene derart ausgebildet, dass ein Abstand zwischen der Rollobahn und der jeweiligen Führungsschiene zwischen den beiden Umlenkbereichen so groß ist, dass in einem betriebsgemäßen Zustand der Verdunklungsvorrichtung die Rollobahn nicht in Kontakt mit den Führungsschienen gelangen kann. Durch diese Abstandsanpassung oder auch Höhenanpassung wird ein sogenanntes Stoffschlagen vermieden. Insbesondere bei ultraschallverschweißten Textilelementen mit dem Rollostoff würde andernfalls der Stoff sehr nahe an der Führungsschiene liegen, durch den Schweißvorgang verhärten und beispielsweise bei Anregung durch Fahrprofile im Fahrzeug gegen die Führungsschiene schlagen. Durch die Vergrößerung des Abstands auf ein ausreichendes Maß wird erheblich zu einer Reduzierung von Geräuschemissionen beigetragen.

Gemäß einem weiteren Aspekt wird ein Fahrzeugdach für ein Kraftfahrzeug offenbart, welches eine Verdunkelungsvorrichtung nach einer der zuvor beschriebenen Ausführungsformen aufweist, die mit dem Fahrzeugdach gekoppelt ist.

Gemäß einem weiteren Aspekt wird ein Kraftfahrzeug offenbart, welches ein obiges Fahrzeugdach aufweist, welches fest mit einer Dachkarosserie gekoppelt ist.

Die Führungsschiene, das Fahrzeugdach sowie das Fahrzeug gemäß der weiteren Aspekte ermöglichen die genannten Vorteile und Funktionen.

Weitere Vorteile und Funktionen sind in der nachfolgenden, ausführlichen Beschreibung eines Ausführungsbeispiels unter Zuhilfenahme der angehängten Figuren beschrieben. Elemente gleicher Konstruktion oder Funktion sind figurenübergreifend mit den gleichen Bezugszeichen gekennzeichnet.

In den Figuren zeigen:
Figur 1 eine schematische, perspektivische Ansicht eines Fahrzeugs,
Figur 2 eine schematische Querschnittsansicht einer Führungsschiene,
Figur 3 eine schematische Querschnittsansicht einer Führungsschiene gemäß einem Ausführungsbeispiel der Erfindung,
Figur 4 eine Überlagerung einer jeweiligen Detailansicht der Führungsschienen gemäß Figuren 2 und 3, und
Figur 5 eine schematische Querschnittsansicht einer Verdunklungsvorrichtung gemäß einem Ausführungsbeispiel der Erfindung.

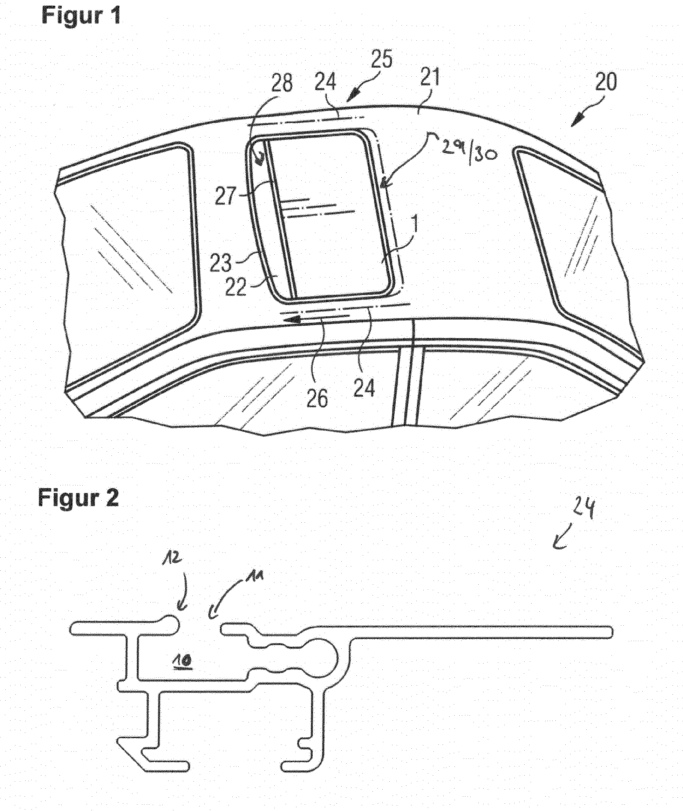

Figur 1 zeigt eine schematische Ansicht eines Fahrzeugs 20, welches ein Fahrzeugdach 21 hat, das mit einer Dachöffnung 22 versehen ist. Das Fahrzeugdach 21 ist fest mit einer übrigen Dachkarosserie gekoppelt. Die Dachöffnung 22 ist mittels eines verschiebbaren Schiebedachdeckels wahlweise verschließbar oder zumindest teilweise freigebbar. Alternativ ist die Dachöffnung 22 mittels einem transparenten Dachelement, etwa einem Panoramadach, fest verschlossen. In diesem Fall ist ein unbewegliches transparentes Dachelement vorgesehen. Die Dachöffnung 22 wird von einem an dem Fahrzeugdach 21 ausgebildeten Dachöffnungsrahmen 23 begrenzt. Der Dachöffnungsrahmen 23 hat beidseitig angeordnete Führungsschienen 24, in denen unterhalb des verschiebbaren Schiebedachdeckels eine Verdunklungsvorrichtung 25 vorgesehen ist. Die Verdunklungsvorrichtung 25 weist eine Rollobahn 1 auf, die in einer Auszugsrichtung 26 nach vorne und entgegengesetzt nach hinten verschoben werden kann, so dass die Rollobahn 1 auf- und abgewickelt wird. Die Auszugsrichtung 26 verläuft im Wesentlichen parallel zu einer Längsachse des Fahrzeugs 20. Die Rollobahn 1 dient dazu, Sonnenlicht und Umgebungslicht über die Dachöffnung 22 in das Fahrzeug 20 zu lassen oder vor einem Eindringen in das Fahrzeug 20 zu hindern.

Die Rollobahn 1 ist seitlich in den Führungsschienen 24 geführt und erstreckt sich zumindest beim Auf- und Abwickeln zwischen diesen. Die Rollobahn 1 kann an einem bezogen auf die Auszugsrichtung 26 hinteren Ende vollständig aufgewickelt werden. Hierzu ist beispielsweise eine Wickelvorrichtung 29 vorgesehen, die eine Wickelwelle 30 (auch Rollowelle genannt) aufweist. Die beiden letztgenannten Elemente sind lediglich schematisch angedeutet in Figur 1. Die Rollobahn 1 wird auf die Wickelwelle 30 zu einem Rollowickel aufgerollt, wobei die Wickelwelle 30 eine Wickelfeder aufweist, die eine Spannung in Auszugsrichtung 26 auf die Rollobahn 1 zum Straffen dieser aufbringt (nicht dargestellt). Zum Ausziehen beziehungsweise Verschieben der Rollobahn 1 ist optional zumindest ein Zugspriegel 27 an einem vorderen Ende 28 der Rollobahn 1 vorgesehen, der zum Betätigen der Rollobahn 1 vorgesehen ist.

Alternativ kann die Rollobahn 1 auch automatisch, beispielsweise über eine elektrische Einrichtung, betätigt werden. Es sei weiterhin erwähnt, dass die Wickelvorrichtung 29 auch andersartig ausgestaltet sein kann. Beispielsweise ist keine Wickelwelle vorgesehen. Die Rollobahn 1 wird somit ohne Wickelwelle zu dem Rollowickel aufgerollt. Weiterhin ist nicht zwingend eine Wickelfeder vorgesehen. Die Spannung in Auszugsrichtung 26 kann auch anderweitig, beispielsweise über Seitenführungselemente wie Rollofedern eingebracht werden.

Figur 2 zeigt schematisch einen Querschnitt einer Führungsschiene 24 gemäß einer Ausführungsform. Die Führungsschiene 24 hat entlang der Auszugsrichtung 26 (normal zur Bildebene) einen Führungskanal 10, der zur verschiebbaren Führung der Rollobahn 1 ausgebildet ist. Die Führungsschiene 24 weist eine Öffnung 11 auf, aus der sich die Rollobahn 1 heraus erstreckt zur gegenüberliegenden zweiten Führungsschiene. Die Führungsschiene 24 weist weiter einen Umlenkbereich 12 auf, entlang dessen die Rollobahn 1 in einem betriebsgemäß montierten Zustand anliegt. Der Umlenkbereich gemäß Figur 2 ist kreisrund ausgestaltet und ermöglicht eine flächige Anlage der Rollobahn im Betrieb.

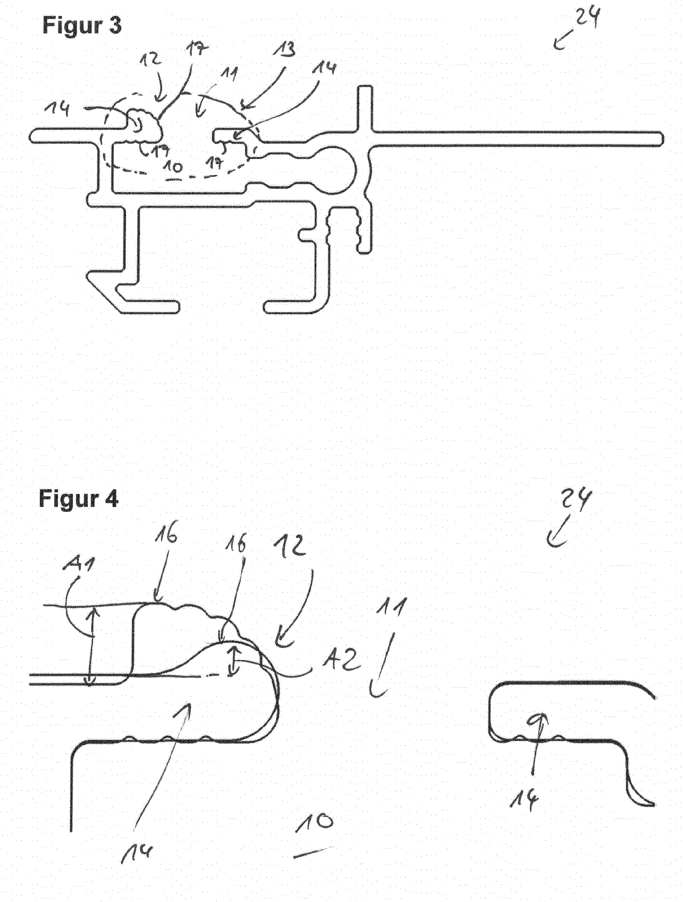

Figur 3 zeigt schematisch eine Führungsschiene 24 gemäß einem Ausführungsbeispiel der Erfindung. Im Unterschied zur vorherigen Führungsschiene weist diese im Umlenkbereich 12 ein welliges Profil 17 auf, welches an der Oberfläche durch kleine Wellen und Rillen gekennzeichnet ist. Das Profil kann auch als "Blumenkohlprofil" bezeichnet werden. Dadurch liegt eine Rollobahn im betriebsgemäßen Zustand nicht vollflächig an der Führungsschiene 24 im Umlenkbereich 12 an, sondern zumindest teilweise in Form einer Linienanlage.

Figur 4 zeigt das Detail 13 der Figur 3 vergrößert, wobei die Ansicht mit einer analogen Detailansicht der Figur 3 überlagert ist. Dabei werden die beiden Profilunterschiede verdeutlicht.

Zu beachten ist, dass optional auch, wie in Figur 3 und 4 gezeigt, obere Abschnitte 14 der Führungsschiene 24, welche den Führungskanal 10 sowie die Öffnung 11 begrenzen, an Unterseiten 15 ebenfalls ein welliges Profil 17 mit Wellen und Rillen aufweist. Die Unterseiten 15 sind demnach einem Inneren des Führungskanals 10 zugewandt.

Die Führungsschiene 24 gemäß Figur 3 ermöglicht die eingangs genannten Vorteile und Funktionen.

Weiterhin ist auch ein Abstand A1 von einer oberen Kante 16 des Umlenkbereichs 12 zu einem Teil der Führungsschiene 24, welcher im Betrieb zwischen den Umlenkbereichen 12 beider Führungsschienen 24 liegt im Vergleich zu einem Abstand A2 der Führungsschiene 24 gemäß Figur 2 vergrößert. Dadurch wird das eingangs genannte Stoffschlagen vermieden oder zumindest reduziert.

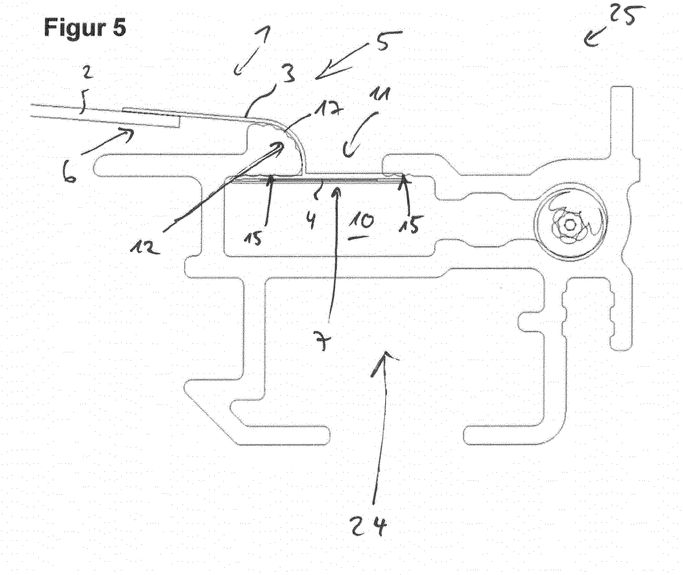

Figur 5 zeigt eine schematische Querschnittsansicht einer Verdunklungsvorrichtung 25 gemäß einem Ausführungsbeispiel der Erfindung mit einer Rollobahn 1. Die Rollobahn 1 weist einen Rollostoff 2 sowie an gegenüberliegenden Seiten 5, die den Führungsschienen 24 zugewandt sind, jeweils ein Textilelement 3 auf, welche jeweils als Textilmodul mit Verstärkungselement 4, etwa ein Metallband, ausgebildet und fest mit dem Rollostoff 2 verbunden sind, etwa mittels Ultraschallschweißen. Die Textilelemente 3 sind an gegenüberliegenden Seitenrändern 6 des Rollostoffs 1 angebunden.

Im betriebsgemäßen Zustand ist die Rollobahn 1 mittels Führungsabschnitten 7 der Textilelemente 3 in den Führungskanälen 10 der beiden Führungsschienen 24 geführt und erstreckt sich zwischen beiden Führungsschienen 24. Dabei ist die Rollobahn 1 quer zur Auszugsrichtung 26 gespannt. Das Textilelement 3 ist formschlüssig an den Unterseiten 15 geführt und ist um den Umlenkbereich 12 aus der Öffnung 11 aus dem Führungskanal 10 eng anliegend geführt. Aufgrund des entsprechenden Profils des Umlenkbereichs 12 findet eine zumindest teilweise Linienauflage des Textilelements 3 statt.

### Bezugszeichenliste:

- 1: Rollobahn
- 2: Rollostoff
- 3: Textilelement
- 4: Verstärkungselement
- 5: Seiten
- 6: Seitenrand
- 7: Führungsabschnitt
- 10: Führungskanal
- 11: Öffnung
- 12: Umlenkbereich
- 13: Detail
- 14: oberer Abschnitt
- 15: Unterseite
- 16: obere Kante
- 17: welliges Profil
- 20: Fahrzeug
- 21: Fahrzeugdach
- 22: Dachöffnung
- 23: Dachöffnungsrahmen
- 24: Führungsschiene
- 25: Verdunklungsvorrichtung
- 26: Auszugsrichtung
- 27: Zugspriegel
- 28: vorderes Ende
- 29: Wickelvorrichtung
- 30: Wickelwelle
- A1: Abstand
- A2: Abstand

## Patentansprüche

1. Führungsschiene (24) für eine Verdunklungsvorrichtung (25), wobei
- die Führungsschiene (24) einen Führungskanal (10) zur verschiebbaren Führung einer Rollobahn (1) aufweist, und
- die Führungsschiene (24) eine Öffnung (11) aufweist, aus der die Rollobahn (1) entlang eines Umlenkbereichs (12) aus dem Führungskanal (10) herausführbar ist;
wobei die Führungsschiene (24) im Umlenkbereich (12) derart ausgebildet ist, dass in einem betriebsgemäßen Zustand mit Rollobahn (1) eine zumindest teilweise Linienanlage durch die Rollobahn (1) ausbildbar ist, **dadurch gekennzeichnet, dass** der Umlenkbereich (12) der Führungsschiene (24) ein Blumenkohlprofil aufweist.

2. Verdunklungsvorrichtung (25) für ein Fahrzeug (20), aufweisend
- eine Rollobahn (1) und eine Wickelwelle (30) zum Auf- und Abwickeln der Rollobahn (1) entlang einer Auszugsrichtung (26), und
- gegenüberliegend angeordnete Führungsschienen (24) jeweils gemäß Anspruch 1, die jeweils einen sich entlang der Auszugsrichtung (26) erstreckenden Führungskanal (10) aufweisen,
wobei die Rollobahn (1) an gegenüberliegenden Seiten (5) beim Auf- bzw. Abwickeln in den Führungskanälen (10) der Führungsschiene (24) verschiebbar entlang der Auszugsrichtung (26) geführt ist und sich zwischen den Führungsschienen (24) derart erstreckt, dass die Rollobahn (1) aus jedem Führungskanal (10) heraus entlang eines Umlenkbereichs (12) in Richtung des jeweils anderen Führungskanals (10) geführt ist, wobei die Rollobahn (1) in dem jeweiligen Umlenkbereich (12) an der zugehörigen Führungsschiene (24) anliegt,
wobei jede Führungsschiene (24) im Umlenkbereich (12) derart ausgebildet ist, dass eine zumindest teilweise Linienanlage durch die Rollobahn (1) ausgebildet ist, sodass entlang der Auszugsrichtung (26) ein flächiger, insbesondere voll- oder glattflächiger, Kontakt vermieden ist, und
wobei der Umlenkbereich (12) jeder Führungsschiene (24) ein Blumenkohlprofil aufweist.

3. Verdunklungsvorrichtung (25) nach Anspruch 2, wobei der Umlenkbereich (12) jeder Führungsschiene (24) ein welliges Profil (17) aufweist.

4. Verdunklungsvorrichtung (25) nach Anspruch 2 oder 3, wobei der Umlenkbereich (12) jeder Führungsschiene (24) ein Profil aufweist, welches zumindest teilweise durch abwechselnd angeordnete Rillen und Wellen gebildet ist.

5. Verdunklungsvorrichtung (25) nach einem der Ansprüche 2 bis 4, wobei die Rollobahn (1) durch einen Rollostoff (2) gebildet ist, an dessen gegenüberliegenden Seitenrändern (6) jeweils ein Textilelement (3) festgelegt ist, wobei
- jedes Textilelement (3) einen Führungsabschnitt (7) aufweist, der in dem Führungskanal (10) der entsprechenden Führungsschiene (24) geführt ist, und
- jedes Textilelement (3) an dem entsprechenden Umlenkbereich (12) anliegt und aus dem jeweiligen Führungskanal (10) heraus geführt ist.

6. Verdunklungsvorrichtung (25) nach einem der Ansprüche 2 bis 5, wobei die Rollobahn (1) quer zur Auszugsrichtung (26) zumindest beim Auf- und Abwickeln gespannt ist.

7. Verdunklungsvorrichtung (25) nach einem der Ansprüche 2 bis 6, wobei der Umlenkbereich (12) jeder Führungsschiene (24) derart ausgebildet ist, dass ein Abstand (A1) zwischen der Rollobahn (1) und der jeweiligen Führungsschiene (24) zwischen den beiden Umlenkbereichen (12) so groß ist, dass in einem betriebsgemäßen Zustand der Verdunklungsvorrichtung (25) die Rollobahn (1) nicht in Kontakt mit den Führungsschienen (24) gelangen kann.

8. Fahrzeugdach (21) für ein Fahrzeug (20), umfassend:
eine Verdunkelungsvorrichtung (25) nach einem der Ansprüche 2 bis 7, die mit dem Fahrzeugdach (21) gekoppelt ist.

9. Fahrzeug (20), umfassend:
ein Fahrzeugdach (21) nach Anspruch 8, welches fest mit einer Dachkarosserie gekoppelt ist.

## Claims

1. Guide rail (24) for a shading device (25), wherein
- the guide rail (24) has a guide channel (10) for displaceably guiding a roller blind web (1), and
- the guide rail (24) has an opening (11) through which the roller blind web (1) is guidable out of the guide channel (10) along a deflection region (12) ;
wherein the guide rail (24) is configured in the deflection region (12) in such a manner that, in an operational state with the roller blind web (1), at least partial linear contact is able to be formed by the roller blind web (1),
**characterized in that**
the deflection region (12) of the guide rail (24) has a cauliflower profile.

2. Shading device (25) for a vehicle (20), having
- a roller blind web (1) and a winding shaft (30) for winding up and unwinding the roller blind web (1) along an extension direction (26), and
- guide rails (24), in each case according to Claim 1, that are arranged opposite one another and each have a guide channel (10) extending in the extension direction (26),
wherein the roller blind web (1) is guided in a displaceable manner in the extension direction (26) on opposite sides (5) in the guide channels (10) of the guide rail (24) while being wound up and unwound and extends between the guide rails (24) in such a manner that the roller blind web (1) is guided out of each guide channel (10) along a deflection region (12) in the direction of the respective other guide channel (10), wherein the roller blind web (1) bears on the associated guide rail (24) in the respective deflection region (12),
wherein each guide rail (24) is configured in the deflection region (12) in such a manner that at least partial linear contact is formed by the roller blind web (1), such that flat, in particular extensive or smooth, contact is avoided along the extension direction (26); and
wherein the deflection region (12) of each guide rail (24) has a cauliflower profile.

3. Shading device (25) according to Claim 2, wherein the deflection region (12) of each guide rail (24) has a wavy profile (17).

4. Shading device (25) according to Claim 2 or 3, wherein the deflection region (12) of each guide rail (24) has a profile that is formed at least partially by alternately arranged grooves and waves.

5. Shading device (25) according to one of Claims 2 to 4, wherein the roller blind web (1) is formed by a roller blind material (2) to each of the opposite lateral edges (6) of which a textile element (3) is fastened, wherein
- each textile element (3) has a guide portion (7) that is guided in the guide channel (10) of the corresponding guide rail (24), and
- each textile element (3) bears on the corresponding deflection region (12) and is guided out of the respective guide channel (10).

6. Shading device (25) according to one of Claims 2 to 5, wherein the roller blind web (1) is tensioned transversely to the extension direction (26) at least while it is being wound up and unwound.

7. Shading device (25) according to one of Claims 2 to 6, wherein the deflection region (12) of each guide rail (24) is configured in such a manner that a distance (A1) between the roller blind web (1) and the respective guide rail (24) between the two deflection regions (12) is so large that, in an operational state of the shading device (25), the roller blind web (1) cannot come into contact with the guide rails (24).

8. Vehicle roof (21) for a vehicle (20), comprising:
a shading device (25) according to one of Claims 2 to 7, which is coupled to the vehicle roof (21).

9. Vehicle (20), comprising:
a vehicle roof (21) according to Claim 8, which is fixedly coupled to a roof body.

## Revendications

1. Rail de guidage (24) pour un dispositif d'obscurcissement (25),
- le rail de guidage (24) présentant un canal de guidage (10) pour le guidage coulissant d'une bande de store (1), et
- le rail de guidage (24) présentant une ouverture (11) à partir de laquelle la bande de store (1) peut être guidée hors du canal de guidage (10) le long d'une zone de renvoi (12) ;
le rail de guidage (24) étant réalisé dans la zone de renvoi (12) de telle sorte que, dans un état de fonctionnement avec bande de store (1), une application linéaire au moins partielle peut être réalisée par la bande de store (1), **caractérisé en ce que** la zone de renvoi (12) du rail de guidage (24) présente un profil en chou-fleur.

2. Dispositif d'obscurcissement (25) pour un véhicule (20), présentant
- une bande de store (1) et un arbre d'enroulement (30) pour enrouler et dérouler la bande de store (1) le long d'une direction d'extraction (26), et
- des rails de guidage (24) agencés en vis-à-vis, chacun selon la revendication 1, qui présentent respectivement un canal de guidage (10) s'étendant le long de la direction d'extraction (26),
la bande de store (1) étant guidée sur des côtés opposés (5) lors de l'enroulement ou du déroulement dans les canaux de guidage (10) du rail de guidage (24) de manière coulissante le long de la direction d'extraction (26) et s'étendant entre les rails de guidage (24) de telle sorte que la bande de store (1) est guidée hors de chaque canal de guidage (10) le long d'une zone de renvoi (12) en direction de l'autre canal de guidage (10) respectif, la bande de store (1) s'appliquant dans la zone de renvoi respective (12) sur le rail de guidage (24) associé,
chaque rail de guidage (24) étant réalisé dans la zone de renvoi (12) de telle sorte qu'une application linéaire au moins partielle est réalisée par la bande de store (1), de telle sorte que le long de la direction d'extraction (26), un contact plat, notamment sur toute la surface ou sur une surface lisse, est évité, et
la zone de renvoi (12) de chaque rail de guidage (24) présentant un profil en chou-fleur.

3. Dispositif d'obscurcissement (25) selon la revendication 2, dans lequel la zone de renvoi (12) de chaque rail de guidage (24) présente un profil ondulé (17) .

4. Dispositif d'obscurcissement (25) selon la revendication 2 ou 3, dans lequel la zone de renvoi (12) de chaque rail de guidage (24) présente un profil formé au moins partiellement par des rainures et des ondulations agencées en alternance.

5. Dispositif d'obscurcissement (25) selon l'une quelconque des revendications 2 à 4, dans lequel la bande de store (1) est formée par une matière de store (2) sur chacun des bords latéraux opposés (6) de laquelle est fixé un élément textile (3),
- chaque élément textile (3) présentant une section de guidage (7) qui est guidée dans le canal de guidage (10) du rail de guidage (24) correspondant, et
- chaque élément textile (3) s'appliquant contre la zone de renvoi (12) correspondante et étant guidé hors du canal de guidage (10) respectif.

6. Dispositif d'obscurcissement (25) selon l'une quelconque des revendications 2 à 5, dans lequel la bande de store (1) est tendue transversalement à la direction d'extraction (26) au moins lors de l'enroulement et du déroulement.

7. Dispositif d'obscurcissement (25) selon l'une quelconque des revendications 2 à 6, dans lequel la zone de renvoi (12) de chaque rail de guidage (24) est réalisée de telle sorte qu'une distance (A1) entre la bande de store (1) et le rail de guidage (24) respectif entre les deux zones de renvoi (12) est suffisamment importante pour que, dans un état de fonctionnement du dispositif d'obscurcissement (25), la bande de store (1) ne puisse pas venir en contact avec les rails de guidage (24).

8. Toit de véhicule (21) pour un véhicule (20), comprenant :
un dispositif d'obscurcissement (25) selon l'une quelconque des revendications 2 à 7, qui est couplé au toit de véhicule (21).

9. Véhicule (20), comprenant :
un toit de véhicule (21) selon la revendication 8, qui est couplé de manière fixe à une carrosserie de toit.
